# EUROPÄISCHE PATENTSCHRIFT

(11) **EP 2 678 086 B1**
(45) Veröffentlichungstag und Bekanntmachung des Hinweises auf die Patenterteilung: **30.04.2014**
(21) Anmeldenummer: 12703974.1
(22) Anmeldetag: 06.02.2012
(51) Int. Cl.: B01D 29/96

(54) **VORRICHTUNG ZUR AUFBEREITUNG VON WASSER**
DEVICE FOR TREATING WATER
DISPOSITIF POUR TRAITER DE L'EAU

(30) Priorität: 25.02.2011 DE 102011012519
(43) Veröffentlichungstag der Anmeldung: 01.01.2014
(73) Patentinhaber: BWT AG, 5310 Mondsee (AT)
(72) Erfinder: JOHANN, Jürgen, 69226 Nussloch (DE); NEUBACHER, Werner, 4880 St. Georgen im Attergau (AT); HITTENBERGER, Hannes, 5310 Mondsee (AT)
(74) Vertreter: Reiser & Partner
(86) Internationale Anmeldenummer: PCT/EP2012/000518
(87) Internationale Veröffentlichungsnummer: WO 2012/113505

(56) Entgegenhaltungen:
- JP-A- 2000 325 712
- US-A- 5 101 850
- US-A1- 2007 119 772
- US-A1- 2008 164 220
- US-A1- 2010 088 873

## Beschreibung

Die Erfindung betrifft eine Vorrichtung zur Aufbereitung von Wasser, umfassend einen Filterkopf mit einem Einlass und einem Auslass sowie einer an dem Filterkopf festlegbaren Filtertasse in welcher ein Wechseleinsatz auswechselbar angeordnet oder mit der Filtertasse verbunden ist, wobei die Filtertasse mit einer Betätigungseinrichtung wirkverbunden ist, durch die die Filtertasse von einer Entnahmeposition in eine Verschlussposition bringbar ist, wobei die Betätigungseinrichtung durch ein Absperrorgan arretierbar ist, wobei das Absperrorgan als Verschlussorgan für den Einlass ausgebildet ist und wobei das Absperrorgan die Betätigungseinrichtung nur dann freigibt, wenn der Einlass verschlossen ist.

In der Wasseraufbereitung werden häufig Filter zur Abtrennung von unterschiedlichen Wasserinhaltsstoffen eingesetzt. Dabei wird grundsätzlich einerseits nach Filtern die zur Abtrennung von nicht wasserlöslichen, insbesondere partikulären Bestandteilen dienen und die nach dem Siebeffekt arbeiten andererseits nach Filtern, welche zur Abtrennung von wasserlöslichen molekularen oder ionischen Inhaltstoffen geeignet sind. Zur Abtrennung von wasserlöslichen molekularen oder von ionischen Wasserinhaltsstoffen sind insbesondere Umkehrosmosefilter, Nanofilter, Aktivkohlefilter oder Ionenaustauscherfilter bekannt. Die Abtrennung dieser Wasserinhaltsstoffe erfolgt einerseits mit Membranen, welche in erster Linie nur für Wasser permeabel sind, und andererseits mit Aktivkohlen oder Ionenaustauscherharzen zur adsorptiven Rückhaltung von Geruchs- und Geschmacksstoffen sowie von organischen Substanzen oder zur Entfernung beziehungsweise Austausch von ionogenen Stoffen.

Ferner sind zur Wasseraufbereitung Ionenaustauscher bekannt. bei denen unerwünschte Ionen wie beispielsweise Calcium-Ionen durch andere Ionen beispielsweise Natrium-Ionen ersetzt werden.

Bei der Wasseraufbereitung in der häuslichen Wasserversorgung werden häufig Filterelemente eingesetzt, welche nach dem Siebeffekt arbeiten. Derartige Filter werden in Abhängigkeit von der Porengröße oder der Maschenweite klassifiziert. Ultrafilter weisen eine Maschenweite bzw. Porengröße von 0,05 bis 0,001 µm auf; Mikrofilter weisen eine Porengröße bzw. Maschenweite von 1 bis 0,05 µm auf. Die Porengröße bzw. Maschenweite der Feinfilter und der Kiesfilter zwischen 5 und 10 µm und die eines Grobfilters beträgt zwischen 20 und 100 µm. Diese Grobfilter werden in der leitungsgebundenen Trinkwasserversorgung, insbesondere in der Hausinstallation als Schutzfilter eingesetzt, bei welchen zum Schutz von Geräten, Installationen, Armaturen der Hausinstallation größere Partikel, insbesondere von Partikeln größer als 20 µm aus dem Trinkwasser abgetrennt werden sollen. Bei diesen Filtern setzt sich durch Partikeleintrag im Laufe des Betriebs das Filtermedium allmählich zu, so dass es notwendig ist, das Filtermedium regelmäßig zu regenerieren, reinigen beziehungsweise auszutauschen.

Zur Reinigung des Filtermediums ist es bekannt, den Schutzfilter als Ausspülfilter, Rückspülfilter und Wechselfilter auszubilden. Ausspülfilter und Rückspülfilter sind als Dauerfilter konzipiert, wobei zur Reinigung das dauerhaft in dem Schutzfilter angeordnete Filterelement mit Wasser ausgespült beziehungsweise rückgespült wird. Beim Rückspülfilter erfolgt das Spülen des Filterelementes entgegen der Filtrationsrichtung. Bei derartigen Filteranordnungen ist nachteilig, dass die Reinigung des Filterelementes häufig nur unzureichend erfolgt und sich bereits kurz nach der Reinigung wieder ein erhöhter Druckverlust in dem Filterelement einstellen kann.

Bei einem Wechselfilter erfolgt die Reinigung des Filters durch Austausch des als Filterlement ausgebildeten Wechselelementes. Dazu ist das Wechselelement in einem Gehäuse, der Filtertasse angeordnet. Es ist auch denkbar, dass das Wechselelement fest mit der Filtertasse verbunden ist oder dass Filtertasse und Wechselelement einstückig ausgebildet sind. In diesen Fällen erfolgt ein Austausch der Filtertasse mit darin befestigtem Wechselement.

Zum Austausch des Filterelements wird zunächst der Einlass durch ein Absperrorgan abgesperrt. Falls auslassseitig kein Rückflussverhinderer vorgesehen ist, ist auch der Auslass abzusperren. Anschließend wird die Filtertasse vom Filterkopf getrennt, das gebrauchte Filterelement aus der Filtertasse herausgenommen und durch ein neues ersetzt. Die Befestigung der Filtertasse am Filterkopf erfolgt mittels eines Gewindes oder einer Flanschverschraubung. Dieser Vorgang ist aufwendig und für einen Laien kompliziert. Häufig bestehen Probleme, die Filtertasse aus dem Filterkopf zu entnehmen und bei unvollständigem Verschluss von Einlass und/oder Auslass kann es zu größeren Wasserverlusten kommen.

Die US 2007/0119772 A1 zeigt eine Vorrichtung, umfassend einen Filterkopf mit einem Einlass und einem Auslass sowie einer an dem Filterkopf festlegbaren Filtertasse, in welcher ein Wechseleinsatz auswechselbar angeordnet ist.

Die US 2008/0164220 A1 zeigt eine Wasserbehandlungseinrichtung, welche einen Filter umfasst und bei welcher ein Einsatz in eine Halterung eingesetzt wird, welche über einen Hebel axial zu dem Filter auf- und abwärts bewegt werden kann. Die Bewegung des Einsatzes erfolgt über einen Hebel, welcher über einer Anordnung von Verbindungsstangen und Drehachsen mit dem Einsatz verbunden ist.

Die JP 2000/325712 zeigt eine Vorrichtung, bei der der gesamte Filterkopf samt Filtertasse bewegt wird.

Die US 2010/0088873 A1 zeigt ein Filtermodul, bei dem ein Filter über einen Hebelmechanismus in axialer Richtung relativ zu einem Filterkopf beweglich ist.

Die US 5,101,850 zeigt eine Sicherungsvorrichtung gegen ungewolltes Lösen des Filtereinsatzes.

Der Erfindung liegt die Aufgabe zugrunde, den Wechsel des Filterelementes einer Filteranordnung zu vereinfachen.

Diese Aufgabe wird mit den Merkmalen von Anspruch 1 gelöst. Auf vorteilhafte Ausgestaltungen nehmen die Unteransprüche Bezug.

Zur Lösung der Aufgabe umfasst die Betätigungseinrichtung einen Hebel, wobei der Hebel an dem Filterkopf angelenkt ist, wobei das Absperrorgan drehbar an dem Filterkopf angeordnet ist, wobei der Hebel eine Durchbrechung aufweist, durch die das Absperrorgan hindurchragt, wobei der Hebel nur in einer vorgegebenen Stellung des Absperrorgans freigegeben ist.

In der Verschlussposition befindet sich die Filtertasse unmittelbar unter dem Filterkopf. Vorzugsweise weisen sowohl die Filtertasse als auch der Filterkopf jeweils einen kongruent ausgestalteten Flansch auf und in wenigstens einem Flansch ist ein Dichtelement angeordnet. Die Betätigungseinrichtung drückt die Filtertasse selbsttätig mit Vorspannung an den Filterkopf an, so dass die Verbindung zwischen Filterkopf und Filtertasse auch bei hohen Drücken gesichert ist. Zum Auswechseln oder Reinigen des Wechseleinsatzes wird die Filtertasse mittels der Betätigungseinrichtung von der Verschlussposition in die Entnahmeposition gebracht. Dabei ist die Filtertasse derart geführt, dass sich die Filtertasse ausschließlich in axialer Richtung von der Filtertasse weg bewegt. Im Gegensatz zu Filtertassen, die mittels einer Überwurfmutter oder einer Flanschverschraubung an dem Filterkopf gehalten sind, ist der Austausch bei der erfindungsgemäßen Ausgestaltung besonders einfach. Bei der Montage der Filtertasse mittels einer Überwurfmutter wird die Überwurfmutter meist handfest angezogen. Hierbei besteht das Problem, dass die Überwurfmutter nach einer längeren Betriebsdauer festsitzen kann, so dass sie nicht mehr manuell gelöst werden kann und der Einsatz von Werkzeug notwendig ist. Aufgrund der Ausgestaltung der Überwurfmutter aus Kunststoff kann diese dabei jedoch beschädigt werden. Bei einer Flanschverschraubung ist von vornherein Werkzeugeinsatz notwendig. Bei der erfindungsgemäßen Ausgestaltung ist jeder Einsatz von Werkzeug entbehrlich. Es ist lediglich erforderlich die Betätigungseinrichtung zu betätigen, um die Filtertasse in axialer Richtung von dem Filterkopf weg zu bewegen. Dadurch ist die Wartung eines Wechselfilters erheblich vereinfacht und auch für Laien durchführbar.

Die Betätigungseinrichtung umfasst einen Hebel, wobei der Hebel an dem Filterkopf angelenkt ist. Ein Hebel ist besonders einfach und für jedermann intuitiv bedienbar. Ferner ermöglicht ein entsprechend ausgelegter Hebel das Einbringen größerer Kräfte in das Gestänge, so dass die Filtertasse dauerhaft dicht an den Filterkopf angedrückt werden kann. Der Hebel ist dabei derart in die Betätigungseinrichtung eingebunden, dass eine Bewegung des Hebels auf das Gestänge übertragen wird und dadurch die Filtertasse zwischen der Verschlussposition und der Entnahmeposition bewegt wird.

Die Betätigungseinrichtung ist durch ein Absperrorgan arretierbar. Das Absperrorgan verhindert ein unbeabsichtigtes Lösen der Filtertasse von dem Filterkopf. Zum Arretieren kann in der Betätigungseinrichtung eine Durchbrechung angeordnet sein durch die das Absperrorgan hindurch ragt. Die Durchbrechung ist so geformt, dass der Hebel nur dann bewegt werden kann, wenn sich das Absperrorgan in einer bestimmten vorgegebenen Position befindet.

Das Absperrorgan ist drehbar an dem Filterkopf angeordnet, wobei der Hebel eine Durchbrechung aufweist, durch die das Absperrorgan hindurch ragt, wobei der Hebel nur in einer vorgegebenen Stellung des Absperrorgans freigegeben ist. Diese Ausgestaltung ist eine einfach herstellbare Sicherung gegen unbeabsichtigtes Lösen des Hebels.

Die Filtertasse kann einem Mitnehmer zugeordnet sein, wobei der Mitnehmer mit der Betätigungseinrichtung wirkverbunden ist. Bei dieser Ausgestaltung ist die Filtertasse vorzugsweise derart dem Mitnehmer zugeordnet, so dass die Filtertasse wenigstens in einer Bewegungsrichtung relativ zu der Betätigungseinrichtung zwangsgeführt ist. Bei den bekannten Filteranordnungen bei denen die Filtertasse mittels einer Überwurfmutter montiert ist, kann die Filtertasse nach längerer Betriebsdauer auch nach Lösen der Überwurfmutter fest an dem Filterkopf anhaften und dadurch schwer entnehmbar sein. Durch die Zwangsführung wird die Filtertasse beim Betätigen der Betätigungseinrichtung stets in axialer Richtung von der Verschlussposition in die Entnahmeposition gebracht. Dabei wird die Filtertasse zwangsweise von dem Filterkopf gelöst und ist dadurch einfach entnehmbar.

Die Filtertasse ist vorzugsweise mit ihrem freien, dem Filterkopf abgewandten Ende auf dem Mitnehmer angebracht. Dabei bildet der Mitnehmer sowohl eine Führung als auch eine Halterungseinrichtung für die Filtertasse, wobei der Mitnehmer die Filtertasse in der Verschlussposition dichtend an den Filterkopf andrückt und zur Entnahme des in der Filtertasse angeordneten Filterelementes die Filtertasse in axialer Richtung zwangsweise von dem Filterkopf wegbewegt.

Die Betätigungseinrichtung kann an dem Filterkopf angelenkt sein und ein Gestänge aufweisen, welches mit dem Mitnehmer derart wirkverbunden ist, dass sich beim Betätigen Betätigungseinrichtung die mit dem Mitnehmer verbundene Filtertasse zwischen der Entnahmeposition und der Verschlussposition bewegt. Das Gestänge verbindet den Mitnehmer mit der Betätigungseinrichtung, insbesondere mit dem Element der Betätigungseinrichtung, welches dem manuellen Eingriff dient. Über das Gestänge erfolgt die Kraftübertragung ausgehend aus der Betätigungseinrichtung auf den Mitnehmer und der mit dem Mitnehmer verbundenen Filtertasse.

Vorzugsweise ist die Filtertasse formschlüssig auf dem Mitnehmer befestigbar. Dazu kann in dem Mitnehmer ein Schlitz, eine Nut oder eine Schwalbenschwanznut angeordnet sein, die zu einer einfach zugänglichen Seite des Mitnehmers geöffnet sind. Die Filtertasse kann an ihrem freien Ende mit einem Vorsprung versehen sein, welcher eine Querschnittserweiterung aufweist. Dieser Vorsprung kann als Pilzkopf ausgebildet sein, der zum Festlegen der Filtertasse auf dem Mitnehmer in dessen Nut eingeführt werden kann. Nachdem die Filtertasse derartig auf dem Mitnehmer formschlüssig fixiert ist, ergibt sich eine Zwangsführung bei der sich die Filtertasse stets gemeinsam mit dem Mitnehmer bewegt.

Dabei ist in einer besonders vorteilhaften Ausgestaltung das Gestänge über einen Exzenter schwenkbar an dem Filterkopf angeordnet. Gestänge und Hebel sind bei dieser Ausgestaltung auf einer Achse schwenkbar an dem Filterkopf befestigt, wobei der Anbindungspunkt des Gestänges außerhalb der Rotationsachse liegt. Durch diese exzentrische Anbindung ergibt sich ein Kniehebel und es erfolgt eine Umwandlung der Schwenkbewegung des Hebels in eine translatorische Bewegung des Gestänges. Ferner erfolgt die exzentrische Verbindung zwischen Gestänge und Hebel derart, dass beim Bewegen des Hebels und des Gestänges in die Verschlussposition ein oberer Totpunkt überschritten wird. Diesen oberen Totpunkt kann das Gestänge, auch durch Einwirkung des Leitungsdrucks des Wassersystems, nicht überwinden und die Filtertasse ist selbsttätig und dauerhaft an dem Filterkopf fixiert.

Vorzugsweise ist eine Führungseinrichtung vorgesehen, welche die Bewegungsfreiheit der Filtertasse vorgibt. Vorzugsweise ist die Führungseinrichtung derart ausgebildet, dass sich die Filtertasse lediglich linear und axial zu dem Filterkopf bewegen kann. Die Führungseinrichtung verhindert eine unkontrollierte Auf- und Ab-Bewegung des Mitnehmers und der mit dem Mitnehmer verbundenen Filtertasse. Des Weiteren verbessert sich durch die Führungseinrichtung die Krafteinleitung des Gestänges in den Mitnehmer, so dass die Bewegung des Mitnehmers und der mit dem Mitnehmer verbundenen Filtertasse eine rein translatorische Bewegung ist. Insofern bildet die Führungseinrichtung ein Gegenlager zu dem Anbindungspunkt des Gestänges an den Mitnehmer.

Die Führungseinrichtung kann zumindest eine Führungshülse und zumindest eine Leitschiene umfassen, wobei die Führungshülse an dem Filterkopf festgelegt und die Leitschiene an dem Mitnehmer festgelegt ist, wobei die Leitschiene axial verschieblich in der Führungshülse aufgenommen ist. Durch diese Ausgestaltung ist sichergestellt, dass sich der Mitnehmer und die mit dem Mitnehmer verbundene Filtertasse ausschließlich in axialer Richtung bewegen können. Beim Bewegen der Filtertasse in die Verschlussposition taucht die Leitschiene in die Führungsschiene ein und begrenzt somit den Freiheitsgrad bezüglich der Bewegungsrichtungen der Filtertasse.

Das Absperrorgan kann als Verschlussorgan für den Einlass ausgebildet sein, wobei das Absperrorgan die Betätigungseinrichtung nur dann freigibt, wenn der Einlass verschlossen ist. Beim Bewegen der Filtertasse von der Verschlussposition in die Entnahmeposition wird das Leitungsnetz geöffnet, so dass es erforderlich ist, das Leitungsnetz vor und hinter der Filteranordnung abzusperren. Der Auslass, also die Seite der Hausinstallation kann dabei besonders einfach mittels eines Rückflussverhinderers selbsttätig abgesperrt werden. Der Einlass ist jedoch manuell abzusperren. Dies kann durch das Absperrorgan erfolgen, welches gleichzeitig die Betätigungseinrichtung arretiert. Eine besonders einfache und sichere Bedienbarkeit der Filteranordnung ergibt sich, wenn das Absperrorgan den Hebel nur dann freigibt, wenn der Einlass verschlossen ist.

Das Absperrorgan ist vorzugsweise als Hahn, insbesondere als Kugelhahn ausgebildet. Bei einem Kugelhahn ist vorteilhaft, dass der Einlass bereits nach einer Drehung des Kugelhahns von 90° vollständig verschlossen ist. Somit ist der Kugelhahn insbesondere geeignet, gleichzeitig als Arretierung für die Betätigungseinrichtung zu fungieren.

Die Filtertasse kann mit einem Stützkörper versehen sein. Ein derartiger Stützkörper kann in Form eines Käfigs ausgebildet sein und die Filtertasse außenseitig umgeben. Dabei ist die Filtertasse vorzugsweise aus durchsichtigem Werkstoff, insbesondere durchsichtigem Kunststoff und der Stützkörper ist aus undurchsichtigem Kunststoff gefertigt. Eine derartig abgestützte Filtertasse kann aus einem dünnwandigen Kunststoff gefertigt sein, wodurch sich aufgrund der höheren Kosten eines durchsichtigen im Vergleich zu undurchsichtigem Kunststoff Kostenvorteile ergeben.

Die Filtertasse kann an dem freien Ende einen Vorsprung aufweisen, der durch eine Öffnung des Stützkörpers und durch einen in dem Mitnehmer angeordneten Schlitz hindurch ragt. Vorzugsweise bildet der Vorsprung, beispielsweise durch die Ausgestaltung als Pilzkopf, ein Formschlusselement zur Verbindung der Filtertasse mit dem Mitnehmer. Dadurch, dass der Vorsprung durch den Stützkörper hindurch ragt ist sichergestellt, dass sowohl die Filtertasse als auch der Stützkörper von der Verschluss- in die Entnahmeposition gebracht werden.

Zur Verbesserung der Abdichtung zwischen Filtertasse und Filterkopf kann die Filtertasse auf der dem Filterkopf zugewandten Seite einen umlaufenden Dichtungsrand aufweisen, wobei der Dichtungsrand in der Verschlussposition zumindest teilweise in eine Aufnahme des Filterkopfs eintaucht und wobei der Dichtungsrand außenumfangsseitig mit einer Dichtung versehen ist, welche in der Aufnahme dichtend anliegt. Bei dieser Ausgestaltung erfolgt eine Abdichtung zwischen Filtertasse und Filterkopf in radialer Richtung und nicht, wie aus dem Stand der Technik bekannt, in axialer Richtung. Insbesondere ist vorteilhaft, dass die Dichtwirkung unabhängig von der Anpresskraft der Filtertasse an den Filterkopf ist. Dies ist insbesondere vor dem Hintergrund vorteilhaft, dass sich die Filtertasse bei der exzentrischen Anbindung des Gestänges kurz vor dem Erreichen der Verschlussposition leicht absenkt, wodurch sich die Anpresskraft der Filtertasse an den Filterkopf nach Erreichen eines Höchstwertes wieder verringert. In einer bevorzugten Ausgestaltung ist die Dichtung als O-Ring ausgebildet, der in eine umlaufende Nut des Dichtungsrandes angeordnet ist. Bei einer Ausgestaltung der Filtertasse mit Wechselelement als austauschbare Einheit wäre auch denkbar, die Dichtung direkt an die Filtertasse anzuformen oder anderweitig stoffschlüssig mit der Filtertasse zu verbinden. Bei der vorgenannten Ausgestaltung erfolgt ein Wechsel der Dichtung durch Austausch der Filtertasse.

Einige Ausführungsbeispiele der erfindungsgemäßen Vorrichtung zur Aufbereitung von Wasser werden nachfolgend anhand der Figuren näher erläutert. Diese zeigen, jeweils schematisch:
- Fig. 1: eine Vorrichtung mit Filtertasse in der Entnahmeposition in perspektivischer Ansicht;
- Fig. 2: eine Vorrichtung mit Filtertasse in der Entnahmeposition in der Seitenansicht;
- Fig. 3: eine Vorrichtung mit Filtertasse in der Verschlussposition in der Seitenansicht;
- Fig. 4: eine Vorrichtung mit Filtertasse in der Verschlussposition in der Vorderansicht;
- Fig. 5: eine Vorrichtung mit Filtertasse in der Verschlussposition in der Vorderansicht, wobei die Betätigungsvorrichtung nicht dargestellt ist;
- Fig. 6: im Detail die Anordnung von Mitnehmer und Filtertasse;
- Fig. 7: die Ausgestaltung der Filtertasse mit Stützkörper sowie die Öffnung des Mitnehmers in der Draufsicht.

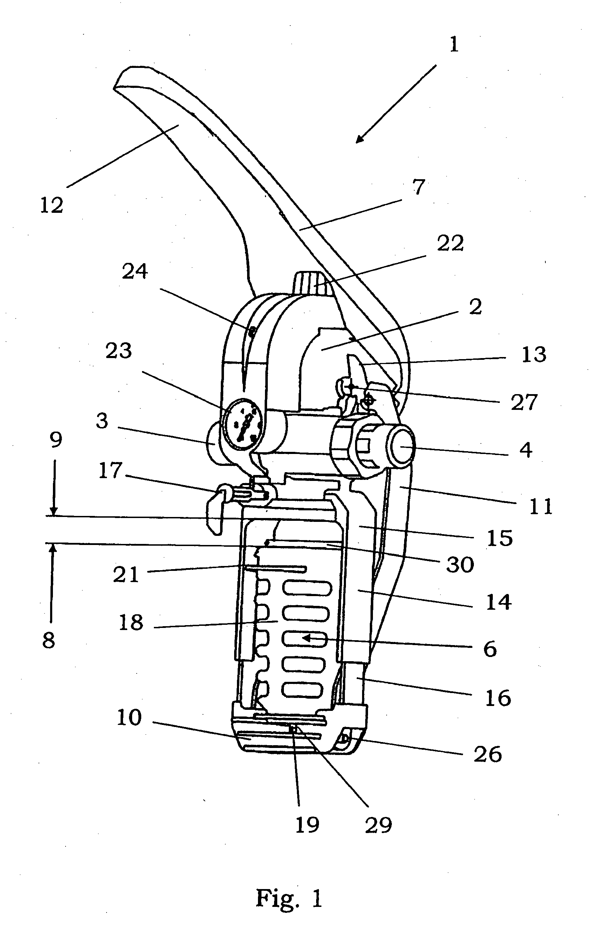

Figur 1 zeigt Vorrichtung 1 zur Aufbereitung von leitungsgebundenem Wasser, insbesondere zur Aufbereitung von Trinkwasser in der häuslichen Wasserversorgung. Zur Einbindung der Vorrichtung 1 in das Leitungsnetz umfasst der Filterkopf 2 der Vorrichtung 1 einen Einlass 3 und einem Auslass 4, welche als Schraubanschlüsse ausgebildet sind. Zur Aufbereitung des Wassers ist an dem Filterkopf 2 eine Filtertasse 5 festlegbar, in welcher ein Wechseleinsatz 6 auswechselbar angeordnet ist. In einer anderen Ausgestaltung kann der Wechseleinsatz 6 auch mit der Filtertasse 5 verbunden sein. In diesem Fall erfolgt ein Austausch der Filtertasse 5 mit darin angeordnetem Wechseleinsatz6. Der Wechseleinsatz 6 ist je nach Anforderung ausgebildet und kann problemlos durch einen anderen Wechseleinsatz 6 ersetzt werden. Zur Filtration von Trinkwasser, insbesondere zum Filtrieren von Partikeln verschiedener Größe kann der Wechseleinsatz als Filtereinsatz ausgebildet sein, insbesondere als nach dem Siebeffekt arbeitender Filtereinsatz mit einer vorgegebenen Porengröße oder Maschenweite. Zur Entfernung von Geruchs- oder Geschmacksstoffen kann der Wechseleinsatz 6 als Aktivkohlefilter ausgebildet sein und zur Entfernung unerwünschter Ionen kann der Wechseleinsatz 6 als Ionenaustauscher ausgebildet sein.

Die Filtertasse 5 ist einem Mitnehmer 10 zugeordnet, wobei der Mitnehmer 10 mit einer Betätigungseinrichtung 7 wirkverbunden ist, durch die die Filtertasse 5 von einer Entnahmeposition 8 in eine Verschlussposition 9 bringbar ist. Die Betätigungseinrichtung 7 umfasst einen Hebel 12, der an dem Filterkopf 2 angelenkt ist und ein Gestänge 11, welches mit dem Mitnehmer 10 über ein Gelenk 26 derart wirkverbunden ist, dass sich beim Betätigen der Betätigungseinrichtung 7 die mit dem Mitnehmer 10 verbundene Filtertasse 5 zwischen der Entnahmeposition 8 und der Verschlussposition 9 bewegt. Das Gestänge 11 und der Hebel 12 sind jeweils schwenkbar auf einer Achse 27 angeordnet, wobei die Schwenkachse des Gestänges 11 zu der Achse 27 verschoben ist. Dazu ist auf der Achse 27 ein Exzenter 13 vorgesehen. Durch Betätigen des Hebels 12 wird ein Drehmoment in den Exzenter 13 eingebracht, welches aufgrund der exzentrischen Anbindung des Gestänges 11 in eine translatorische Bewegung des Gestänges 11 gewandelt wird.

Zur Abdichtung weist die Filtertasse 5 auf der dem Filterkopf 2 zugewandten Seite einen umlaufenden Dichtungsrand 30 auf, wobei der Dichtungsrand 30 in der Verschlussposition 9 zumindest teilweise in eine Aufnahme 31 des Filterkopfs 2 eintaucht. Der Dichtungsrand 30 ist außenumfangsseitig mit einer Dichtung 32 versehen, welche in der zylindrischen Aufnahme 31 an dessen Innenwand dichtend anliegt und in radialer Richtung abdichtet. Die Dichtung 32 ist als O-Ring ausgebildet, welcher in einer Nut des Dichtungsrandes 30 angeordnet ist. Bei der Ausgestaltung mit fest in der Filtertasse 5 angeordnetem Wechseleinsatz 6 kann die Dichtung 32 ebenfalls fest, insbesondere stoffschlüssig mit der Filtertasse 5 verbunden sein.

Zwischen Filterkopf 2 und Mitnehmer 10 ist eine Führungseinrichtung 14 vorgesehen, welche die Bewegungsfreiheit der Filtertasse 5 vorgibt. Die Führungseinrichtung 14 umfasst zwei Führungshülsen 15 die auf gegenüberliegenden Seiten der Filtertasse 5 angeordnet sind und an dem Filterkopf 2 festgelegt sind. Ferner umfasst die Führungseinrichtung zwei Leitschienen 16, die auf gegenüberliegenden Seiten der Filtertasse 5 an dem Mitnehmer 10 festgelegt sind. Die Leitschienen 16 sind axial verschieblich in der Führungshülse 15 aufgenommen. Durch diese Einschränkung der Bewegungsfreiheit des Mitnehmers 10 und der mit dem Mitnehmer 10 verbundenen Filtertasse 5 in axialer Richtung und der exzentrischen Anbindung des Gestänges 11, welches über ein Gelenk 26 an dem Mitnehmer 10 angebunden ist, ergibt sich ein Kniehebelmechanismus, so dass sich die Filtertasse 5 bei Betätigung des Hebels 12 ausschließlich in axialer Richtung zwischen der Entnahmeposition 8 und der Verschlussposition 9 bewegen kann, ohne dass Rotations- oder Schwenkbewegungen überlagert sind.

Das Gestänge 11 besteht aus flächigem metallischem Werkstoff und ist so ausgestaltet, dass es auf der dem Hebel 12 abgewandten Seite rückseitig bogenförmig um die Filtertasse herumgeführt ist. Die Führungshülsen 15 und die Leitschienen 16 bestehen aus Kunststoff. Der Mitnehmer 10 ist als Bodenplatte ausgebildet und besteht ebenfalls aus Kunststoff.

In dem Filterkopf 2 ist ein Druckminderer 22 vorgesehen, durch den der Vordruck auf der Seite des Einlasses 3 regulierbar ist. Die Funktion des Druckminderers 22 kann durch das an dem Filterkopf angebrachte Manometer 23 überwacht werden.

Die Signalisierung eines notwendigen Austauschs des Wechseleinsatzes 6 erfolgt über eine Wechselanzeige, die in dieser Ausgestaltung als optische Anzeige ausgebildet ist, welche nach Ablauf einer vorgegebenen Zeit, beispielsweise nach sechs Monaten, zu leuchten oder zu blinken beginnt.

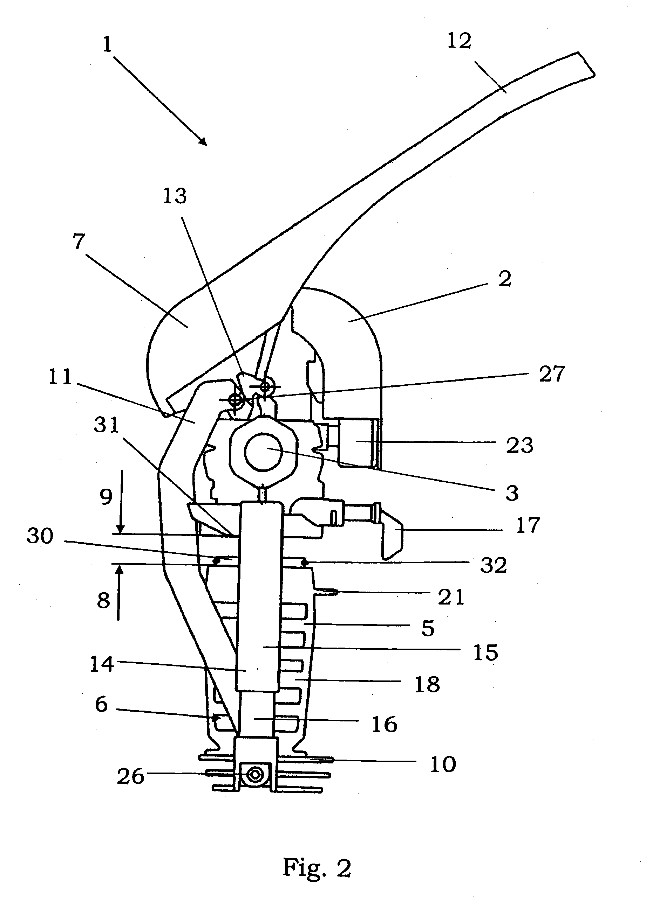

Figur 2 zeigt die in Figur 1 beschriebene Vorrichtung 1 in der Seitenansicht. Zu erkennen ist, dass die schwenkbare Anbindung des Gestänges 11 an dem Filterkopf 2 über einen 13 Exzenter erfolgt, so dass die Schwenkachse des Gestänges 11 zu der Achse 27 versetzt ist. Die Anbindung des Gestänges 11 ist ferner derart erfolgt, dass das Gestänge 11 beim Verfahren der Filtertasse 5 von der Entnahmeposition 8 in die Verschlussposition 9 einen oberen Totpunkt überschreitet und die Verschlussposition 9 erst einige Grad nach Überschreiten erreicht ist und das Gestänge 11 relativ zu der Achse 27 wieder ein wenig herabsinkt. Dadurch ist ein selbsttätiges Lösen der Filtertasse 5 verhindert, weil das Gestänge 11 aufgrund der Einwirkung des Wasserdrucks auf die Filtertasse 5 daran gehindert ist, sich eigenständig in Richtung der Achse 27 zu bewegen. Die Figuren 1 und 2 zeigen jeweils die Filtertasse 5 in der Entnahmeposition 8.

Die Filtertasse 5 ist außenseitig mit einem Stützkörper 18 versehen, so dass die Filtertasse aus einem kostengünstigen und dünnwandigen Kunststoff gefertigt sein kann. Der Stützkörper 18 besteht ebenfalls aus Kunststoff und ist käfigartig ausgebildet und mit Öffnungen versehen, so dass der in der Filtertasse 5 angeordnete Wechseleinsatz 6 beobachtet werden kann. An dem Stützkörper 18 ist ein Griffstück 21 vorgesehen, welches ein einfaches Entnehmen der Filtertasse 5 aus der Vorrichtung 1 ermöglicht.

An dem Filterkopf 2 ist ein Absperrorgan 17 angeordnet, welches als Hahn, vorzugsweise als Kugelhahn ausgebildet ist. Das Absperrorgan 17 ist dem Einlass 3 zugeordnet, wobei durch Drehen des Hahns um 90° der Einlass versperrt und geöffnet werden kann.

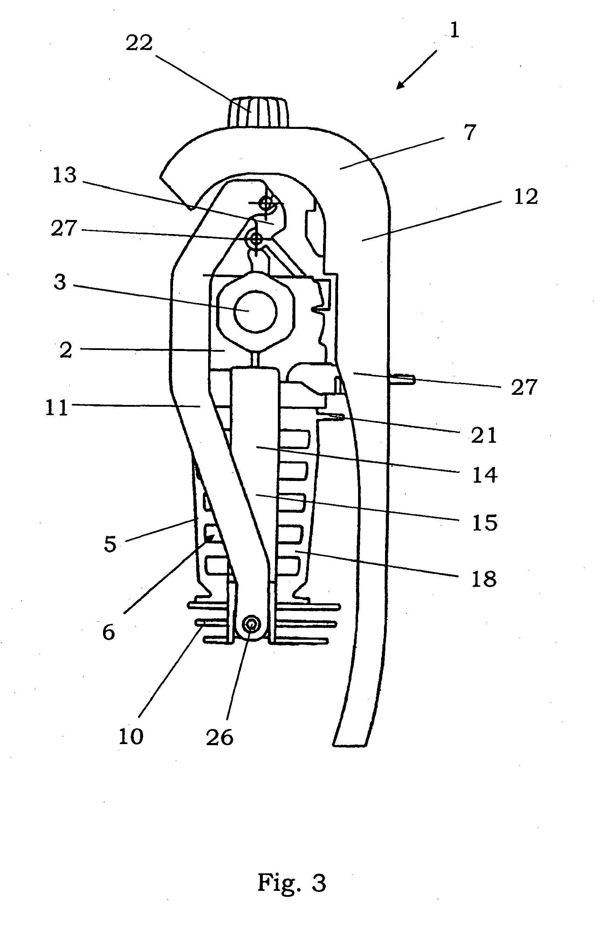

Figur 3 zeigt die in den Figuren 1 und 2 beschriebene Vorrichtung 1, wobei sich die Filtertasse 5 in dieser Figur in der Verschlussposition 9 befindet. Diese Position entspricht der Betriebsposition, in welcher die das durch die Vorrichtung 1 strömende Wasser aufbereitet wird. Zum Aufbereiten des Wassers strömt das Wasser entweder von der Außenseite des als Hohlzylinder ausgebildeten Wechseleinsatzes 6 auf die Innenseite oder umgekehrt.

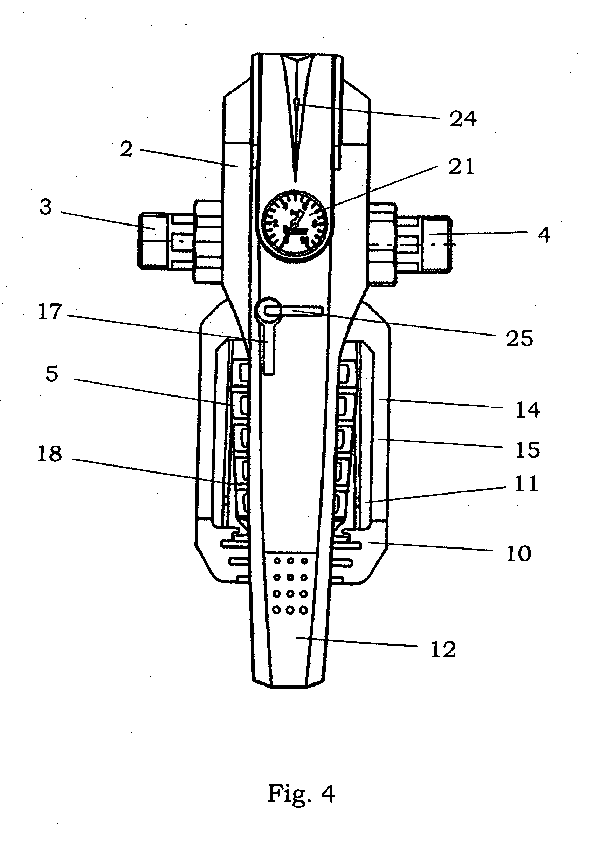

Figur 4 zeigt die in Figur 3 beschriebene Vorrichtung 1 in der Vorderansicht. Zu erkennen ist, dass das Absperrorgan 17 drehbar an dem Filterkopf 2 angeordnet ist und einen Quer zur Drehachse ausgerichteten Knauf 28 aufweist. Der Hebel 12 weist eine schlitzartige Durchbrechung 25 aufweist, welche kongruent zu dem Knauf 28 ausgebildet ist. In der Verschlussposition 9 ragt der Knauf 28 des Absperrorgans 17 aus der Durchbrechung 25 heraus. Durch Drehen des Absperrorgans 17 wird der Knauf 28 relativ zu der Durchbrechung 25 verdreht, so dass der Hebel 12 blockiert ist. Der Hebel 12 ist nur in einer vorgegebenen Stellung des Absperrorgans 17 freigegeben, wobei das Absperrorgan 17 die Betätigungseinrichtung 7 nur dann freigibt, wenn der Einlass 3 verschlossen ist.

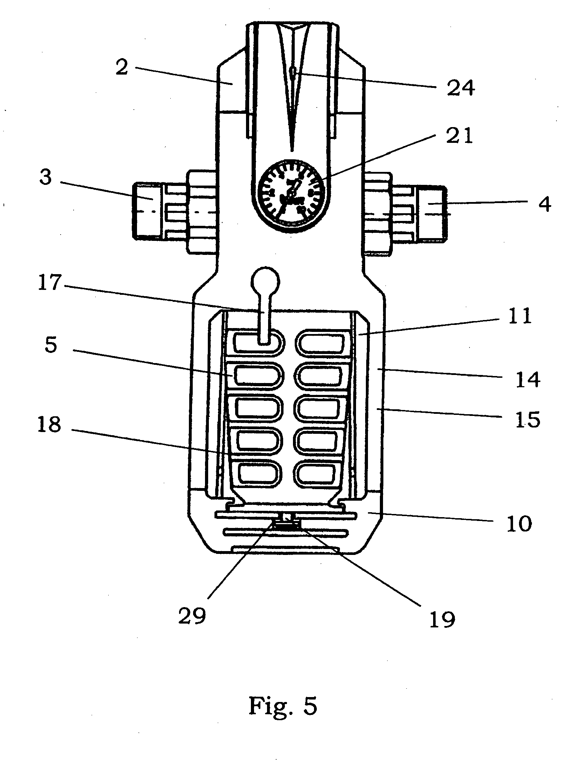

Figur 5 zeigt die in Figur 4 gezeigte Vorrichtung 1, wobei in dieser Figur der Hebel 12 nicht dargestellt ist. Es ist zu erkennen, dass die Filtertasse 5 mit dem Stützkörper 18 und der Mitnehmer 10 formschlüssig miteinander verbunden sind. Dazu weist die Filtertasse 5 an dem freien Ende einen Vorsprung 19 auf, der durch eine Öffnung 20 des Stützkörpers 18 und durch einen in dem Mitnehmer vorgesehenen Schlitz 29 hindurch ragt. Der Vorsprung 19 weist einen erweiterten Kopf, beispielsweise einen Pilzkopf auf, aus dem sich ein Hinterschnitt ergibt, wodurch die Filtertasse nicht in axialer Richtung von dem Mitnehmer 10 entfernt werden kann. Dadurch, dass der Vorsprung 19 durch eine Öffnung 20 des Stützkörpers 18 hindurch ragt, können Stützkörper 18 und Filtertasse 5 einfach voneinander getrennt werden, indem eine Kraft auf den Vorsprung 19 ausgeübt wird.

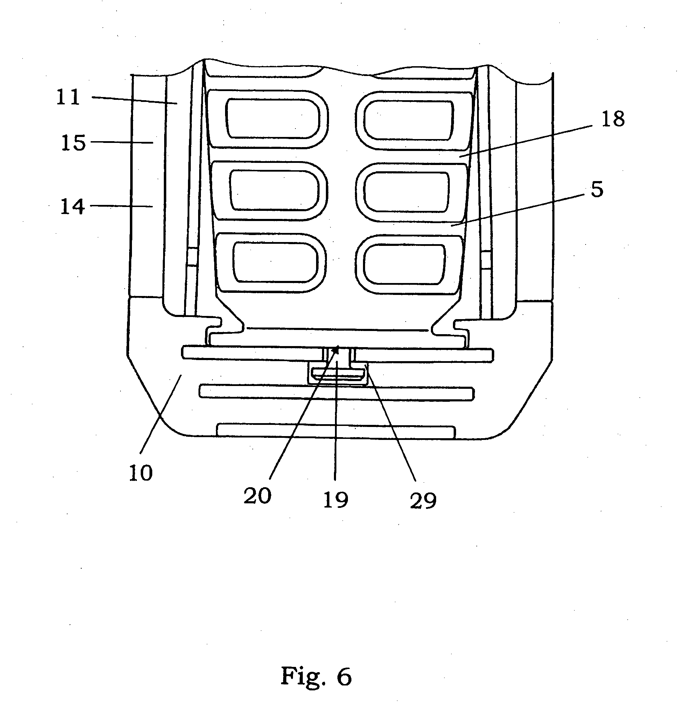

Figur 6 zeigt den Figur 5 beschriebenen Formschluss zwischen Filtertasse 5 und Mitnehmer 10 im Detail.

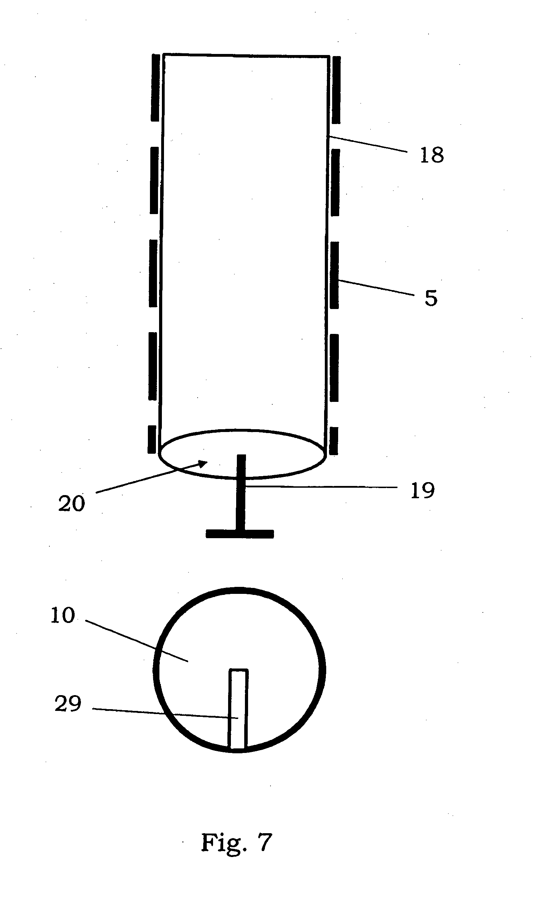

Figur 7 zeigt die Ausgestaltung des Vorsprungs 19 als Pilzkopf mit einer kreisförmigen Erweiterung an dem freien Ende des Vorsprungs 19. Ferner ist dargestellt, dass der Vorsprung 19 an der Filtertasse angeordnet ist und aus dem Stützkörper 18 herausragt.

Der in der Draufsicht dargestellte Mitnehmer 10 weist einen Schlitz 20 auf, der zu einer einfach zugänglichen Seite geöffnet ist. Dadurch kann die durch die Verbindung von Schlitz 29 und Vorsprung 19 auf dem Mitnehmer 10 fixierte Filtertasse 5 nach Erreichen der Entnahmeposition 8 in radialer Richtung aus der Vorrichtung 1 entnommen werden. Anschließend kann der Wechseleinsatz 6 ausgetauscht werden.

### Bezugszeichenliste

- 1: Vorrichtung zur Aufbereitung von Wasser
- 2: Filterkopf
- 3: Einlass
- 4: Auslass
- 5: Filtertasse
- 6: Wechseleinsatz
- 7: Betätigungseinrichtung
- 8: Entnahmeposition
- 9: Verschlussposition
- 10: Mitnehmer
- 11: Gestänge
- 12: Hebel
- 13: Exzenter
- 14: Führungseinrichtung
- 15: Führungshülse
- 16: Leitschiene
- 17: Absperrorgan
- 18: Stützkörper
- 19: Vorsprung
- 20: Öffnung
- 21: Griffstück
- 22: Druckminderer
- 23: Manometer
- 24: Wechselanzeige
- 25: Durchbrechung
- 26: Gelenk
- 27: Achse
- 28: Knauf
- 29: Schlitz
- 30: Dichtungsrand
- 31: Aufnahme
- 32: Dichtung

## Patentansprüche

1. Vorrichtung (1) zur Aufbereitung von Wasser, umfassend einen Filterkopf (2) mit einem Einlass (3) und einem Auslass (4) sowie einer an dem Filterkopf (2) festlegbaren Filtertasse (5) in welcher ein Wechseleinsatz (6) auswechselbar angeordnet oder mit der Filtertasse (5) verbunden ist, wobei die Filtertasse (5) mit einer Betätigungseinrichtung (7) wirkverbunden ist, durch die die Filtertasse (5) von einer Entnahmeposition (8) in eine Verschlussposition (9) bringbar ist, wobei die Betätigungseinrichtung (7) durch ein Absperrorgan (17) arretierbar ist, wobei das Absperrorgan (17) als Verschlussorgan für den Einlass (3) ausgebildet ist und wobei das Absperrorgan (17) die Betätigungseinrichtung (7) nur dann freigibt, wenn der Einlass (3) verschlossen ist, **dadurch gekennzeichnet, dass** die Betätigungseinrichtung (7) einen Hebel (12) umfasst, wobei der Hebel (12) an dem Filterkopf (2) angelenkt ist, wobei das Absperrorgan (17) drehbar an dem Filterkopf (2) angeordnet ist, wobei der Hebel (12) eine Durchbrechung (25) aufweist, durch die das Absperrorgan (17) hindurch ragt, wobei der Hebel (12) nur in einer vorgegebenen Stellung des Absperrorgans (17) freigegeben ist.

2. Vorrichtung nach Anspruch 1, **dadurch gekennzeichnet, dass** die Filtertasse (5) einem Mitnehmer (10) zugeordnet ist, wobei der Mitnehmer (10) mit der Betätigungseinrichtung (7) wirkverbunden ist.

3. Vorrichtung nach Anspruch 2, **dadurch gekennzeichnet, dass** die Betätigungseinrichtung (7) an dem Filterkopf (2) angelenkt ist und ein Gestänge (11) aufweist, welches mit dem Mitnehmer (10) derart wirkverbunden ist, dass sich beim Betätigen der Betätigungseinrichtung (7) die mit dem Mitnehmer (10) verbundene Filtertasse (5) zwischen der Entnahmeposition (8) und der Verschlussposition (9) bewegt.

4. Vorrichtung nach Anspruch 2 oder 3, **dadurch gekennzeichnet, dass** die Filtertasse (5) formschlüssig auf dem Mitnehmer (10) befestigbar ist.

5. Vorrichtung nach Anspruch 1, **dadurch gekennzeichnet, dass** das Gestänge (11) über einen Exzenter (13) schwenkbar an dem Filterkopf (2) angeordnet sind.

6. Vorrichtung nach einem der Ansprüche 1 bis 5, **dadurch gekennzeichnet, dass** eine Führungseinrichtung (14) vorgesehen ist, welche die Bewegungsfreiheit der Filtertasse (5) vorgibt.

7. Vorrichtung nach Anspruch 6, **dadurch gekennzeichnet, dass** die Führungseinrichtung (14) zumindest eine Führungshülse (15) und zumindest eine Leitschiene (16) umfasst, wobei die Führungshülse (15) an dem Filterkopf (2) festgelegt und die Leitschiene (16) an dem Mitnehmer (10) festgelegt ist, wobei die Leitschiene (16) axial verschieblich in der Führungshülse (15) aufgenommen ist.

8. Vorrichtung nach einem der Ansprüche 1 bis 7, **dadurch gekennzeichnet, dass** das Absperrorgan (17) als Hahn, insbesondere als Kugelhahn ausgebildet ist.

9. Vorrichtung nach einem der Ansprüche 1 bis 8, **dadurch gekennzeichnet, dass** die Filtertasse (5) mit einem Stützkörper (18) versehen ist.

10. Vorrichtung nach einem der Ansprüche 1 bis 9, **dadurch gekennzeichnet, dass** die Filtertasse (5) an dem freien Ende einen Vorsprung (19) aufweist, der durch eine Öffnung (20) des Stützkörpers (18) und durch einen in dem Mitnehmer (10) angeordneten Schlitz (29) hindurch ragt.

11. Vorrichtung, nach einem der Ansprüche 1 bis 10, **dadurch gekennzeichnet, dass** die Filtertasse (5) auf der dem Filterkopf (2) zugewandten Seite einen umlaufenden Dichtungsrand (30) aufweist, wobei der Dichtungsrand (30) in der Verschlussposition (9) zumindest teilweise in eine Aufnahme (31) des Filterkopfs (2) eintaucht und wobei der Dichtungsrand (30) außenumfangsseitig mit einer Dichtung (32) versehen ist, welche in der Aufnahme (31) dichtend anliegt.

## Claims

1. A device (1) for the treatment of water, comprising a filter head (2) with an inlet (3) and an outlet (4) and a filter cup (5) that can be affixed to the filter head (2), in which filter cup (5) an interchangeable insert (6) is interchangeably arranged or connected to the filter cup (5), wherein the filter cup (5) is operatively connected to an actuation device (7) by means of which the filter cup (5) can be moved from a removal position (8) to a closed position (9), wherein the actuation device (7) can be blocked by a blocking device (17), wherein the blocking device (17) is designed as a locking device for the inlet (3), wherein the blocking device (17) releases the actuation device (7) only if the inlet (3) is closed, **characterized in that** the actuation device (7) comprises a lever (12), wherein the lever (12) is articulated to the filter head (2), wherein the blocking device (17) is rotatably arranged on the filter head (2), wherein the lever (12) comprises a through-opening (25) through which the blocking device (17) projects, wherein the lever (12) is released only in a predetermined position of the blocking device (17).

2. The device according to claim 1, **characterised in that** the filter cup (5) is associated with a carrier (10), wherein the carrier (10) is operatively connected to the actuation device (7).

3. The device according to claim 2, **characterised in that** the actuation device (7) is articulated to the filter head (2) and comprises a rod arrangement (11) that is operatively connected to the carrier (10) in such a manner that, if the actuation device (7) is operated, the filter cup (5) connected to the carrier (10) moves between the removal position (8) and the closed position (9).

4. The device according to claim 2 or 3, **characterised in that** the filter cup (5) can be attached to the carrier (10) in a positive-locking manner.

5. The device according to claim 1, **characterised in that** by way of an eccentric (13) the rod arrangement (11) is pivotally arranged on the filter head (2).

6. The device according to any one of claims 1 to 5, **characterised in that** a guide device (14) is provided which predetermines the freedom of movement of the filter cup (5).

7. The device according to claim 6, **characterised in that** the guide device (14) comprises at least one guide sleeve (15) and at least one guide rail (16), wherein the guide sleeve (15) is affixed to the filter head (2), and the guide rail (16) is affixed to the carrier (10), wherein the guide rail (16) is accommodated in an axially-slidable manner in the guide sleeve (15).

8. The device according to any one of claims 1 to 7, **characterised in that** the blocking device (17) is designed as a tab, in particular as a ball tab.

9. The device according to any one of claims 1 to 8, **characterised in that** the filter cup (5) comprises a support body (18).

10. The device according to any one of claims 1 to 9, **characterised in that** the filter cup (5) at its free end comprises a projection (19) that projects through an opening (20) in the support body (18) and projects through a slit (29) arranged in the carrier (10).

11. The device according to any one of claims 1 to 10, **characterised in that** on the side facing the filter head (2) the filter cup (5) comprises a circumferential sealing rim (30), wherein in its closed position (9) the sealing rim (30) at least in part dips into a receiving device (31) of the filter head (2), and wherein the sealing rim (30) on its outer circumference comprises a seal (32) that sealingly rests in the receiving device (31).

## Revendications

1. Dispositif (1) destiné à la préparation d'eau, comprenant une tête de filtre (2) avec une entrée (3) et une sortie (4) ainsi qu'un godet de filtre (5) pouvant être fixé sur la tête de filtre (2), dans lequel un insert interchangeable (6) est disposé de façon à pouvoir être changé ou est relié au godet de filtre (5), sachant que le godet de filtre (5) est relié de façon active à un dispositif de déclenchement (7) via lequel le godet de filtre (5) peut être amené d'une position de prélèvement (8) à une position de fermeture (9) sachant que le dispositif de déclenchement (7) peut être bloqué par un organe de blocage (17) sachant que l'organe de blocage (17) est conçu en tant qu'organe de fermeture pour l'entrée (3), sachant que l'organe de blocage (17) ne libère le dispositif de déclenchement (7) que lorsque l'entrée (3) est fermée, **caractérisé en ce que** le dispositif de déclenchement (7) comprend un levier (12), sachant que le levier (12) est articulé sur la tête de filtre (2) sachant que l'organe d'arrêt (17) est disposé en rotation sur la tête de filtre (2), sachant que le levier (12) présente une percée (25) à travers laquelle l'organe de blocage (17) fait saillie, sachant que le levier (12) n'est libéré que dans une position prédéfinie de l'organe de blocage (17).

2. Dispositif selon la revendication 1, **caractérisé en ce qu'**un entraîneur (10) est attribué au godet de filtre (5), sachant que l'entraîneur (10) est relié de façon active au dispositif de déclenchement (7).

3. Dispositif selon la revendication 2, **caractérisé en ce que** le dispositif de déclenchement (7) est articulé sur la tête de filtre (2) et présente une tringlerie (11), qui est en liaison active avec l'entraîneur (10) de telle façon que lorsque le dispositif de déclenchement (7) est activé, le godet de filtre (5) relié à l'entraîneur (10) se déplace entre la position de prélèvement (8) et la position de fermeture (9).

4. Dispositif selon la revendication 2 ou 3, **caractérisé en ce que** le godet de filtre (5) peut être fixé par complémentarité de forme sur l'entraîneur (10).

5. Dispositif selon la revendication 1, **caractérisé en ce que** la tringlerie (11) est disposée de façon à pouvoir pivoter sur la tête de filtre (2) via un excentrique (13).

6. Dispositif selon l'une des revendications 1 à 5, **caractérisé en ce qu'**un dispositif de guidage (14) est prévu, lequel détermine la plage de mouvement du godet de filtre (5).

7. Dispositif selon la revendication 6, **caractérisé en ce que** le dispositif de guidage (14) comprend au moins un manchon de guidage (15) et au moins un rail directionnel (16), sachant que le manchon de guidage (15) est fixé sur la tête de filtre (2) et que le rail directionnel (16) est fixé sur l'entraîneur (10), sachant que le rail directionnel (16) est reçu dans le manchon de guidage (15) de façon à pouvoir être déplacé axialement.

8. Dispositif selon l'une des revendications 1 à 7, **caractérisé en ce que** l'organe de blocage (17) est conçu en tant que robinet, en particulier en tant que robinet à boisseau sphérique.

9. Dispositif selon l'une des revendications 1 à 8, **caractérisé en ce que** le godet de filtre (5) est doté d'un corps d'appui (18).

10. Dispositif selon l'une des revendications 1 à 9, **caractérisé en ce que** le godet de filtre (5) présente sur son extrémité libre une saillie (19) qui passe à travers une ouverture (20) du corps d'appui (18) et à travers une fente (29) disposée dans l'entraîneur (10).

11. Dispositif selon l'une des revendications 1 à 10, **caractérisé en ce que** le godet de filtre (5) présente un bord d'étanchéité (30) périphérique sur le côté tourné vers la tête de filtre (2), sachant que le bord d'étanchéité (30), dans la position de fermeture (9), plonge au moins partiellement dans une réception (31) de la tête de filtre (2) et sachant que le bord d'étanchéité (30) est doté, côté pourtour extérieur, d'un joint (32) qui repose en étanchéité dans la réception (31).
